# EUROPEAN PATENT SPECIFICATION

(11) **EP 3 499 190 B1**
(45) Date of publication and mention of the grant of the patent: **06.11.2024**
(21) Application number: 18164605.0
(22) Date of filing: 28.03.2018
(51) Int. Cl.: G01C 21/36

(54) **VEHICLE CONTROL DEVICE MOUNTED ON VEHICLE AND METHOD FOR CONTROLLING THE VEHICLE**
AUF EINEM FAHRZEUG MONTIERTE FAHRZEUGSTEUERUNGSVORRICHTUNG UND VERFAHREN ZUR STEUERUNG DES FAHRZEUGS
DISPOSITIF DE COMMANDE DE VÉHICULE EMBARQUÉ ET PROCÉDÉ DE COMMANDE DE VÉHICULE

(30) Priority: 15.12.2017 KR 20170173441
(43) Date of publication of application: 19.06.2019
(73) Proprietor: LG Electronics Inc., Yeongdeungpo-Gu Seoul 07336 (KR)
(72) Inventor: CHO, Jaehoon, 06772 Seoul (KR); HEO, Heejeong, 06772 Seoul (KR); PARK, Doyun, 06772 Seoul (KR)
(74) Representative: Vossius & Partner Patentanwälte Rechtsanwälte mbB

(56) References cited:
- EP-A2- 1 903 310
- US-A1- 2006 069 502
- US-A1- 2008 040 034
- US-A1- 2012 084 000
- US-A1- 2012 203 460
- US-A1- 2015 112 587
- US-A1- 2015 134 236
- US-B1- 6 466 865

## Description

### BACKGROUND OF THE INVENTION

### 1. Field of the Invention

The present disclosure relates to a vehicle control device mounted on a vehicle (or provided in a vehicle) and a method for controlling a vehicle.

### 2. Background of the Invention

A vehicle is a machine that a user may move in a desired direction. A typical example of a vehicle may be an automobile.

Meanwhile, various sensors, electronic devices, and the like, are provided for convenience of users of vehicles. In particular, research into an advanced driver assistance system (ADAS) has been actively conducted for driving convenience of users. In addition, autonomous vehicles have been actively developed.

As the ADAS has been actively developed, the necessity to develop a technology that maximizes user convenience and safety in a vehicle operation has emerged.

Meanwhile, in the related art, in order to set a destination or a route, a user should directly input or select the destination or route. Thus, there is a growing need for a method for simply setting a destination or a stopover.

US 2015/134236 A1 relates to an image display system including a server having a storage device that stores images and a mobile terminal having a display device that displays the images acquired from the server. The mobile terminal includes an operation input device that input a refinement condition of images and selects a display image and a control device that sets a location related to a selected image as a destination. The server includes an extraction device that extracts multiple images according to the refinement condition obtained from the mobile terminal.

US 6 466 865 B1 relates to a device for inputting a travel destination into a navigational device used for navigating a motor vehicle in a road network. The inputting device suggests travel destinations to the user, according to predefined criteria, by displaying images of the travel destinations. By choosing an image, the user can select a travel destination.

EP 1 903 310 A2 relates to a vehicle navigation system including a navigation information provider for providing navigation information comprising at least one of origination information, vehicle location information and destination information for guiding a driver to a desired destination, a display unit for displaying the navigation information, a camera unit for generating a front-view image by photographing a front-view of a vehicle and a front-view image storage for storing the front-view image and receiving the vehicle location information from the navigation information provider.

US 2008/040034 A1 relates to a route searching device for searching a route leading from a present location to a destination, comprising a data obtaining portion for obtaining present-location data representing said present location, a map-data storage portion for storing map data, an image-file input portion for inputting an image file in which destination-position data representing a position of said destination is added in advance to image data representing an image of the destination and a route searching portion for searching said route leading from said present location to said destination on the basis of said present-location data, said map data and said destination-position data of said image file.

US 2006/069502 A1 relates to a car navigation system and a car navigation device which can load a memory card that records multiple image files taken by an image taking device with GPS function. All thumbnail image data in the header of the image file, which is recorded in the memory card loaded in the navigation device, is read to display a list of thumbnail images represented by the thumbnail image data. If any of the displayed thumbnail images is selected according to the operation of the cross key, GPS data corresponding to the selected thumbnail image is read to display a position represented by GPS data.

US 2012/084000 A1 relates to systems, methods and devices for providing customized trip plans by identification of one or more travel destinations based on information provided by a user, geo-tagged photographs, and/or travelogues.

US 2012/203460 A1 relates to a method and apparatus for providing point of interest (POI) information of a mobile terminal. The method and apparatus extract POI information, where the POI information and/or associated road information is included in an image captured by a camera. Location information of an image capture place and image capture direction information are read from the digital photo image, and the POI information corresponding to the location and image capture direction information is extracted from a map data, and the extracted POI information is thereafter displayed on the digital photo image.

### SUMMARY OF THE INVENTION

The present invention is directed to solving the above-mentioned problems and other problems. It is another object of the present invention to provide a vehicle control device capable of receiving a plurality of images from an external device, extracting a corresponding destination for each of the received images, and guiding the extracted destination, and a method for controlling a vehicle. Therefore, it is clear for the skilled person that the term "vehicle control device" used herein refers to a control device for use in a vehicle.

The aforementioned objects are achieved by a vehicle control device according to claim 1 and a method for controlling a vehicle including a display unit according to claim 7. In this regard, it is clear to the skilled person that the term "method for controlling a vehicle" refers to the control of at least one unit or device of the vehicle.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the claims will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a view illustrating an appearance of a vehicle according to an embodiment of the present disclosure.
FIG. 2 is a view illustrating a vehicle according to an embodiment of the present disclosure viewed at various angles.
FIGS. 3 and 4 are views illustrating the inside of a vehicle according to an embodiment of the present disclosure.
FIGS. 5 and 6 are views referred to in explaining an object according to an embodiment of the present disclosure.
FIG. 7 is a block diagram referred to in explaining a vehicle according to an embodiment of the present disclosure.
FIG. 8 is a block diagram illustrating an embodiment of a vehicle control device according to the present disclosure.
FIG. 9 is a flow chart illustrating an embodiment of a control method of a vehicle according to the present disclosure.
FIG. 10 is a conceptual view illustrating an embodiment in which a plurality of images are transmitted from an external device.
FIG. 11 is a conceptual view illustrating an embodiment in which a destination is extracted from a plurality of images.
FIG. 12 is a conceptual view illustrating an embodiment in which a plurality of images are classified as groups of destinations and displayed.
FIG. 13 is a conceptual view illustrating an embodiment in which a similar destination regarding a destination is additionally searched.
FIG. 14 is a conceptual view illustrating an embodiment in which a driving route calculated using a destination is output.
FIG. 15 is a conceptual view illustrating an embodiment in which a plurality of driving routes are output.
FIG. 16 is a conceptual view illustrating an embodiment in which a plurality of images are received from a terminal of a driver.
FIGS. 17 and 18 are conceptual views illustrating an embodiment of selecting an image to be transmitted.
FIG. 19 is a conceptual view illustrating an embodiment of selecting a vehicle to be transmitted.
FIG. 20 is a conceptual view illustrating an embodiment in which a plurality of images are transmitted to a vehicle which has approached a terminal from a server.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present invention may be understood as a conception including cars, motorcycles and the like. Hereinafter, the vehicle will be described based on a car.

The vehicle according to the embodiment of the present invention may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

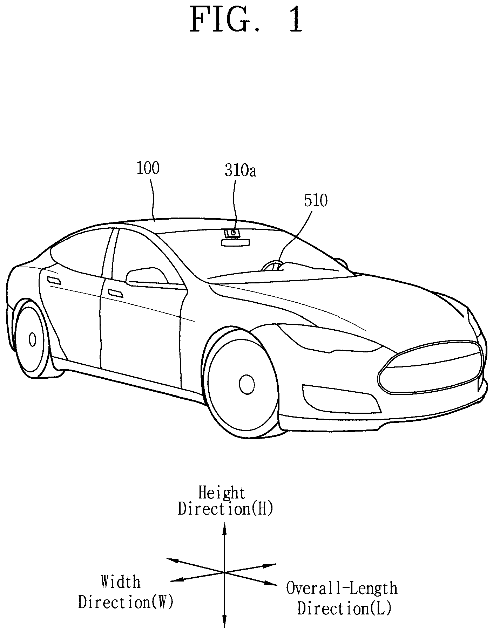

FIG. 1 is a view illustrating appearance of a vehicle in accordance with an embodiment of the present invention.

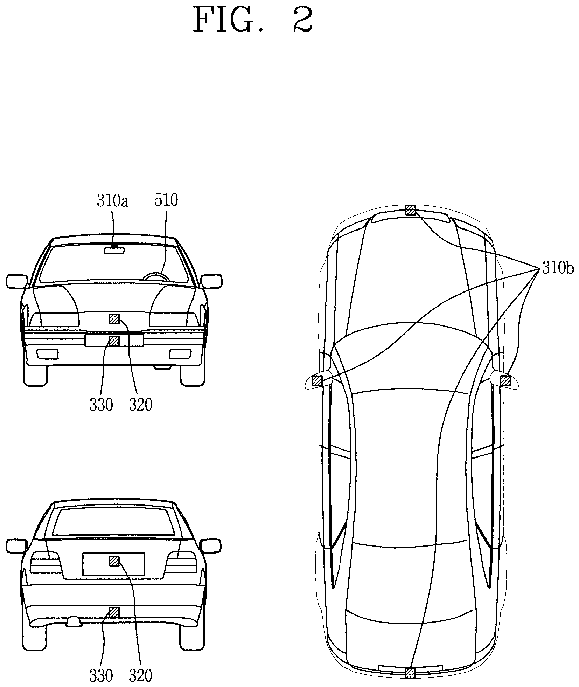

FIG. 2 is a view illustrating appearance of a vehicle at various angles in accordance with an embodiment of the present invention.

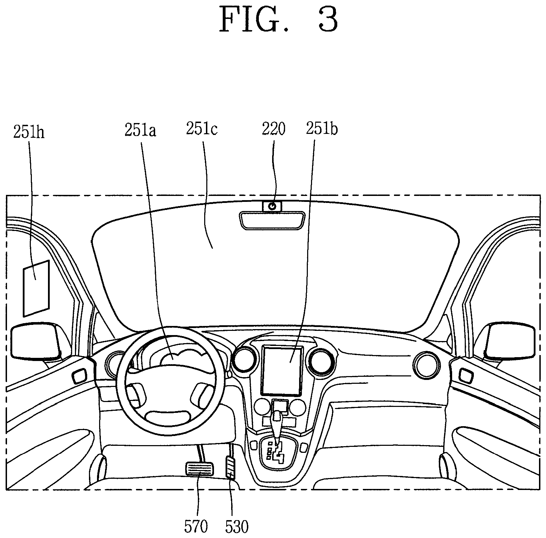

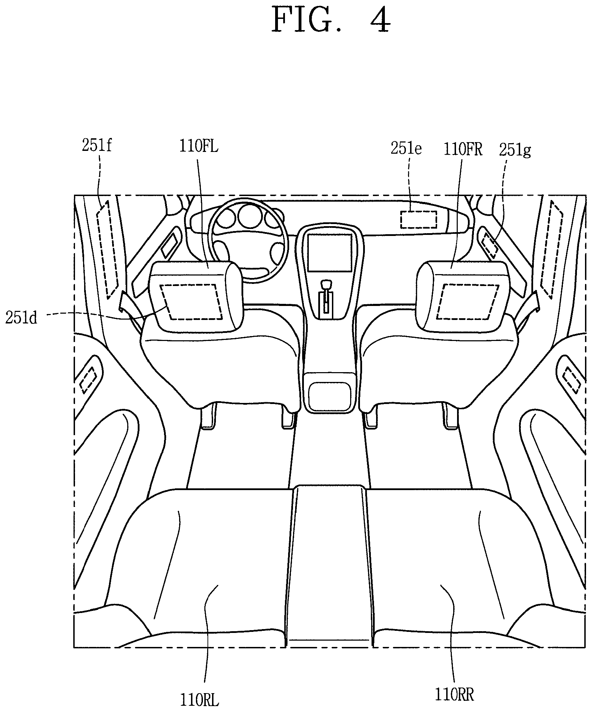

FIGS. 3 and 4 are views illustrating an inside of a vehicle in accordance with an embodiment of the present invention.

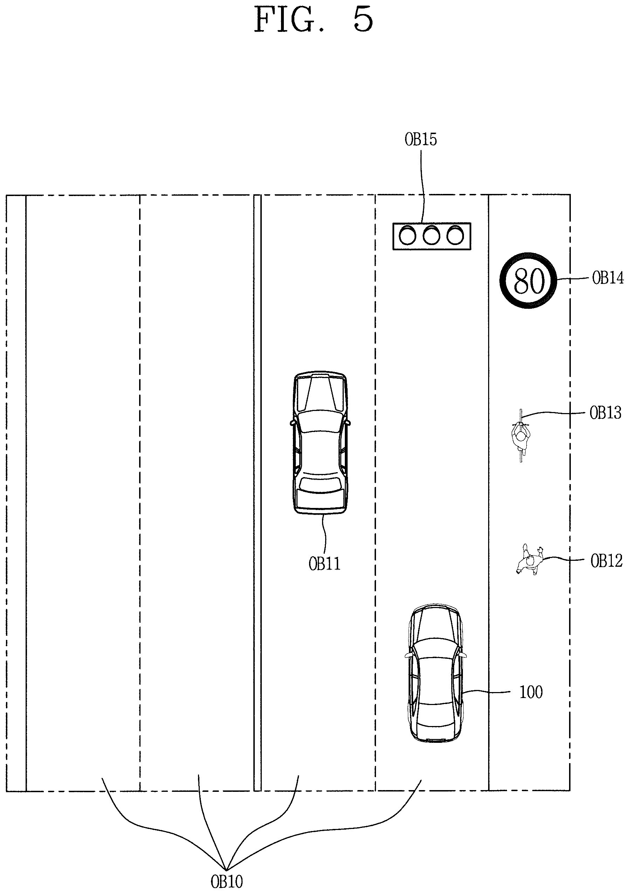

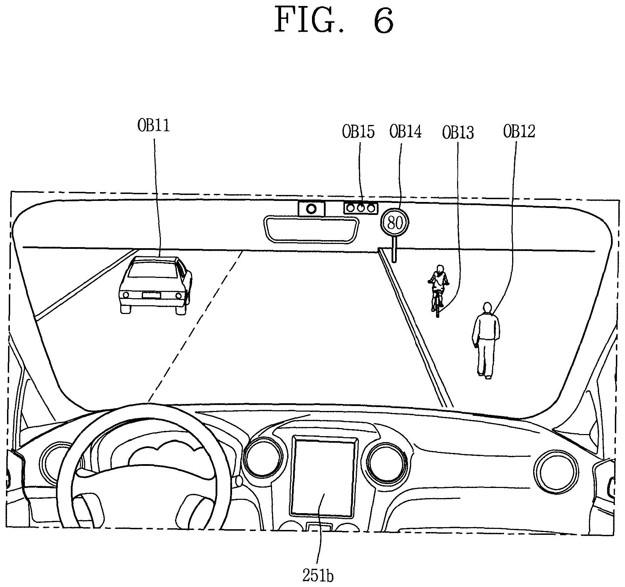

FIGS. 5 and 6 are reference views illustrating objects in accordance with an embodiment of the present invention.

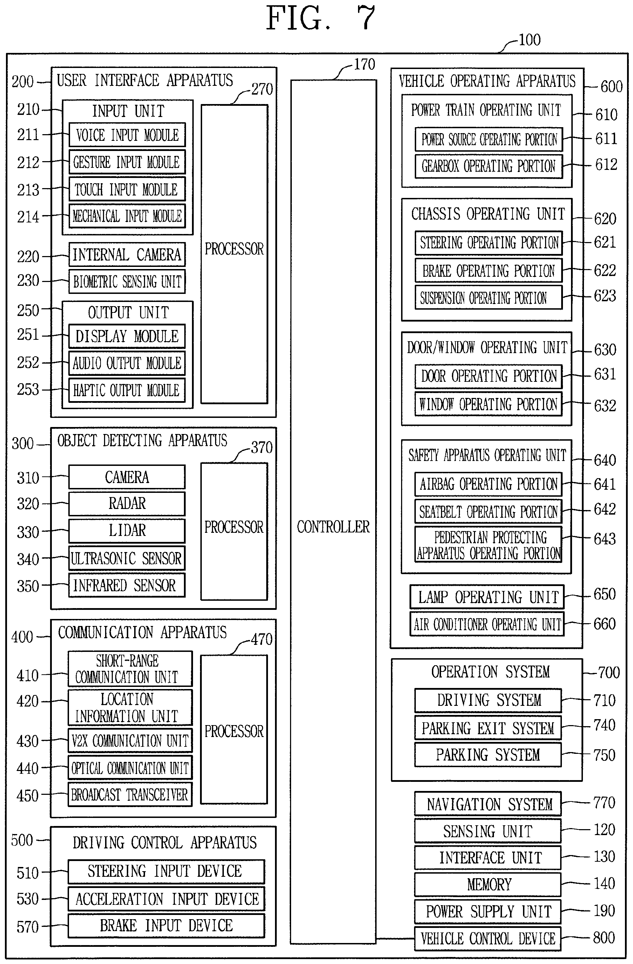

FIG. 7 is a block diagram illustrating a vehicle in accordance with an embodiment of the present invention

As illustrated in FIGS. 1 to 7, a vehicle 100 may include wheels turning by a driving force, and a steering apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle may be converted from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300.

For example, the vehicle 100 may be switched from the manual mode into the autonomous mode or from the autonomous module into the manual mode based on driving environment information generated in the object detecting apparatus 300.

In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface apparatus 200, an object detecting apparatus 300, a communication apparatus 400, a driving control apparatus 500, a vehicle operating apparatus 600, a operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 200 may implement user interfaces (Uls) or user experiences (UXs) through the user interface apparatus 200.

The user interface apparatus 200 may include an input unit 210, an internal camera 220, a biometric sensing unit 230, an output unit 250 and a processor 270.

According to embodiments, the user interface apparatus 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 210 may be disposed within the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

According to an embodiment, the touch input module 213 may be integrated with the display unit 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor 270 may control an overall operation of each unit of the user interface apparatus 200.

According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle.

The user interface apparatus 200 may operate according to the control of the controller 170.

The object detecting apparatus 300 is an apparatus for detecting an object located at outside of the vehicle 100.

The object may be a variety of objects associated with driving (operation) of the vehicle 100.

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a geographical feature, an animal and the like.

The lane OB01 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB13 may refer to a vehicle (transportation facility) that is located near the vehicle 100 and moves using two wheels. The two-wheeled vehicle OB13 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle, light generated from a streetlamp, or solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The geographical feature may include a mountain, a hill and the like.

Meanwhile, objects may be classified into a moving object and a fixed object. For example, the moving object may be a concept including another vehicle and a pedestrian. The fixed object may be a concept including a traffic signal, a road and a structure.

The object detecting apparatus 300 may include a camera 310, a radar 320, a LiDAR 330, an ultrasonic sensor 340, an infrared sensor 350 and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 300 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touchpad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. According to some embodiments, the acceleration input device or the brake input device may also be configured in a shape of a touch screen, a touchpad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

Meanwhile, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include a processor. Each unit of the operation system 700 may individually include a processor.

According to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100.

The driving system 710 may receive object information from the object detecting apparatus 300, transmit a control signal to the vehicle operating apparatus 600 and perform driving of the vehicle 100.

The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detecting apparatus 300, transmit a control signal to the vehicle operating apparatus 600 and perform the exit of the vehicle 100 from the parking lot.

The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100.

The parking system 750 may receive object information from the object detecting apparatus 300, transmit a control signal to the vehicle operating apparatus 600 and park the vehicle 100.

The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

Meanwhile, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the vehicle 100 related to the present disclosure may include a vehicle control device 800.

The vehicle control device 800 may control at least one of the components described above with reference to FIG. 7. In this point of view, the vehicle control device 800 may be the controller 170.

However, without being limited thereto, the vehicle control device 800 may be a separate component independent from the controller 170. When the vehicle control device 800 is implemented as a component independent from the controller 170, the vehicle control device 800 may be provided in a portion of the vehicle 100.

Hereinafter, for the purposes of description, it is assumed that the vehicle control device 800 is a separate component independent from the controller 170. Functions (operations) and control method described with respect to the vehicle control device 800 may be performed by the controller 170 of a vehicle. That is, all contents described in relation to the vehicle control device 800 may also be inferred and applied to the controller 170 in the same or similar manner.

Also, the vehicle control device 800 described in this disclosure may include the components described above with reference to FIG. 7 and some of various components provided in the vehicle. In this disclosure, for the purposes of description, the components described above with reference to FIG. 7 and some of various components provided in the vehicle will be given separate names and reference numerals and described accordingly.

Hereinafter, a vehicle control device and a method thereof according to an embodiment of the present disclosure will be described with reference to the accompanying drawings.

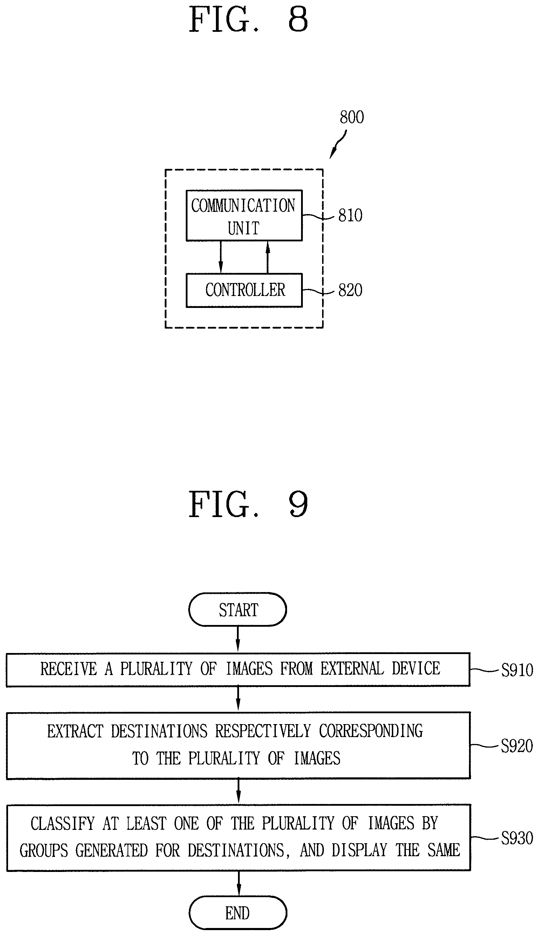

FIG. 8 is a block diagram illustrating an embodiment of a vehicle control device according to the present disclosure.

Referring to FIG. 8, a vehicle control device 800 according to the present disclosure, which controls a vehicle 100 having a display unit 251, includes a communication unit 810 and a controller 820.

As described above, the display unit 251 be implemented in one area of the steering wheel, one area of the instrument panel 521a, 251b, and 251e, one area 251d of the seat, one area 251f of each filler, one area 251g of the door, one area of the center console, one area of the head lining, one area of the sun visor, one area 251c of the windshield, and one area 251h of the window.

The communication unit 810 receives a plurality of images from an external device.

The communication unit 810 is configured to perform communication with the various components described in FIG 7. For example, the communication unit 810 may receive various information provided through the may (controller area network).

In another example, the communication unit 810 may perform communication with all devices capable of performing communication, such as a mobile terminal, a server, and another vehicle. This may be called V2X (Vehicle to everything) communication. V2X communication may be defined as technology that exchanges information such as traffic situation, or the like, while communicating with road infrastructure and another vehicle while driving.

Vehicle to Vehicle (V2V) communication may be understood as an example of V2X communication or as a concept included in V2X communication. That is, the communication unit 810 may perform communication with a nearby vehicle (or another vehicle). This may be named V2V communication. V2V communication may be generally defined as a technique for exchanging information between vehicles, and it is possible to share position information, speed information, and the like, of nearby vehicles.

In an embodiment, the external device may include a mobile terminal, a fixed terminal, a server, and the like. Specifically, the mobile terminal may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (e.g., a smartwatch, a glass type terminal, a head mounted display (HMD)), and the like.

The fixed terminal may include a digital TV, a desktop computer, a digital signage, and the server may include a cloud server and a management server.

The plurality of images may include image files in various formats such as a shot image, a captured or downloaded image, and the like. For example, a photo album image selected by the user of the terminal (external device) may be received through the communication unit 810.

The controller 820 extracts a corresponding destination regarding each of the plurality of images and controls the communication unit 810 to guide the extracted destination through the display unit 251.

As an embodiment, a first destination may be extracted from a first image, one of the plurality of images. Accordingly, a screen for guiding the first destination may be output on the display unit 251. Specifically, information about the first destination may be output, or a driving route to the first destination may be output.

Also, when a plurality of destinations are extracted, the controller 820 may generate a group for each destination and control the communication unit 810 such that at least one of a plurality of images is classified according to the generated groups so as to be displayed.

In an embodiment, the plurality of images may include first and second images, and the controller 820 may extract a first destination corresponding to the first image and a second destination corresponding to the second image.

Accordingly, the first image may be included in a group of the first destination, and the second image may be included in a group of the second destination.

In another embodiment, the first destination and at least one image included in the group of the first destination are displayed in a first area of the display unit 251, and the second destination and at least one image included in the group of the second destination may be displayed in a second area of the display unit 251.

Meanwhile, the control unit (820) is implemented by at least one processor.

FIG. 9 is a flow chart illustrating an embodiment of a control method of a vehicle according to the present disclosure.

Referring to FIG. 9, in a method for controlling the vehicle 100 having the display unit 251, first, a plurality of images are received from an external device (S910).

Next, a destination corresponding to each of the plurality of images is extracted (S920).

The destination corresponding to each of the images may be extracted by various image analysis techniques. In an embodiment, the images may be analyzed and determined which types of images they are, such as a place image, a human image, a food image, and the like.

If it is a place image, a corresponding place may be extracted as a destination. In another example, in the case of a food or object image, a place where the food or the object is sold may be extracted as a destination. Similarly, in the case of a human image, an address or current position of a corresponding person may be extracted as a destination.

In another embodiment, a destination may be extracted using information stored in a specific application or memory. Specifically, when a food image is received, a place where the corresponding food is sold, stored in a predetermined application may be extracted as a destination.

In another embodiment, a place, time, and the like, may be extracted from text information of the image, or a predetermined destination may be extracted from metadata of the image.

In another embodiment, a message asking whether extraction of the destination corresponding to the image is proper may be transmitted to an external device or may be output on the display unit 251.

Thereafter, the extracted destination is guided through the display unit 251 (S930).

In an embodiment, the guiding step includes a step S930 in which when a plurality of extracted destinations are extracted, groups are generated by destinations, and at least one of the plurality of images is classified and displayed according to the generated groups.

In a specific embodiment, the plurality of images include first and second images, and the step of extracting the destination (S920) may include a step of extracting a first destination corresponding to the first image and a second destination corresponding to the second image.

In another embodiment, the guiding step S930 may include a step in which the first destination and at least one image included in the group of the first destination are displayed in a first area and the second destination and at least one image included in the group of the second destination are displayed in a second area of the display unit 251.

In another embodiment, the step of extracting the destination (S920) may include inserting the information on the first destination into the metadata of the first image, and inserting the metadata of the second image into the metadata of the second image and inserting the information.

In another embodiment, the step 920 of extracting the destination may include inserting information regarding the first destination into meta data of the first image and inserting information regarding the second destination into meta data of the second image.

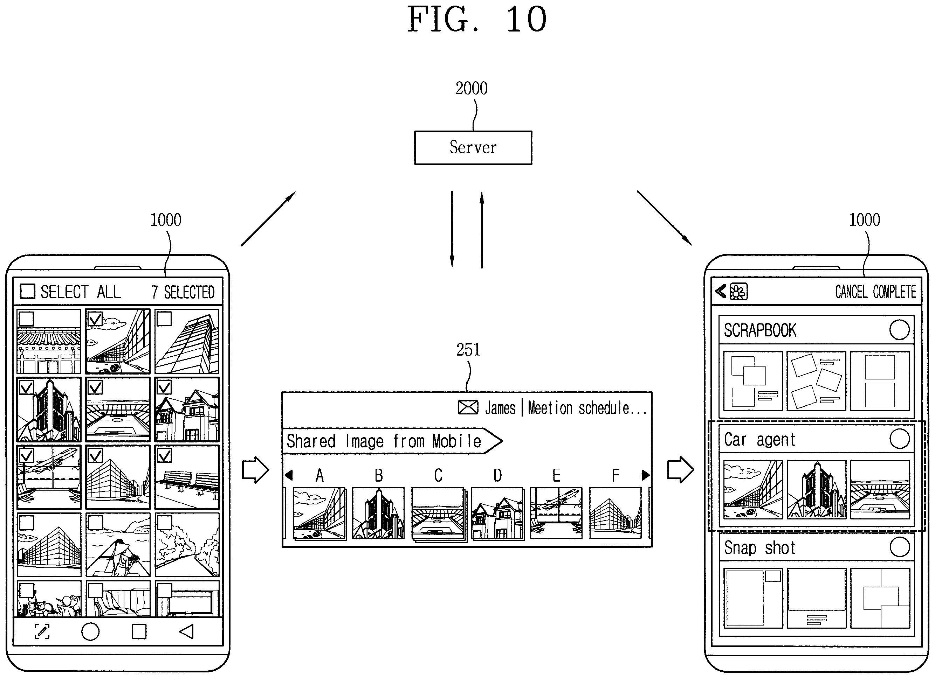

FIG. 10 is a conceptual view illustrating an embodiment in which a plurality of images are transmitted from an external device.

Referring to FIG. 10, a user of a mobile terminal 1000 may select some photo images from a photo album and transmit the selected images to the vehicle 100.

Accordingly, the received photo images may be output on the display 251 of the vehicle 100. Specifically, a predetermined destination may be extracted from the received photo images, and in case where a plurality of destinations are extracted, groups may be generated by destinations. Accordingly, each of the received photo images may be included in a group of extracted destinations and output.

Thereafter, the extracted destination information may be transmitted to the mobile terminal 1000. Accordingly, the mobile terminal 1000 may output the photo images forming groups according to destinations.

Here, information on the extracted destination corresponding to each of the photo images may be inserted as metadata into each of the photo images. For example, when a first destination is extracted to correspond to the first image, information about the first destination may be inserted into metadata of the first image. As a result, in the mobile terminal 1000, it may be checked that the first image belongs to the group of the first destination (the first destination is extracted from the first image).

In another example, the vehicle control device 800 may receive metadata together with a photo image from a server 2000.

That is, the vehicle control device 800 may directly extract a destination from the photo image received from the mobile terminal 1000 or may receive a photo image in which a destination is inserted as meta data, from the server 200.

Meanwhile, the plurality of images include first and second images, and the controller 820 may extract a first destination corresponding to the first image and a second destination corresponding to the second image.

In another embodiment, the controller 820 may insert information about the first destination into the meta data of the first image and insert the information about the second destination into the meta data of the second image.

Accordingly, the controller 820 may control the communication unit 810 to transmit the metadata of the first and second images to the external device.

In another embodiment, the plurality of images include a third image, and when the first destination is extracted to correspond to the third image, the controller 820 may include the first image and the third image in the group of the first destination.

In another embodiment, the plurality of images may include a fourth image, and when a plurality of destinations are extracted to correspond to the fourth image, the controller 820 may include the fourth image in a group of a destination satisfying a predetermined condition among the plurality of destinations.

In a specific example, the controller 820 includes the fourth image in a group of destinations having a largest number of corresponding images among the plurality of destinations.

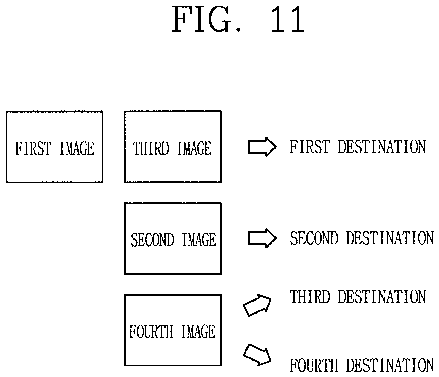

FIG. 11 is a conceptual view illustrating an embodiment in which a destination is extracted from a plurality of images.

Referring to FIG. 11, a first destination is extracted from the first and third images, and a second destination is extracted from the second image. The third and fourth destinations is extracted from the fourth image.

Accordingly, the first and third images from which the same destination is extracted is included in the group of the first destination. And, the second image is included in the group of the second destination.

The fourth image from which a plurality of destinations are extracted may be included in the group of the third destination or the group of the fourth destination. In an embodiment, a group to which the fourth image belongs is determined by comparing the number of images belonging to the group of the third destination with the number of images belonging to the group of the fourth destination. In detail, when the number of images belonging to the group of the third destination is larger than the number of images belonging to the group of the fourth destination, the fourth is included in the group of the third destination.

In another embodiment, information on each extracted destination may be inserted into metadata of the image. Specifically, information on the first destination may be inserted into each of metadata of first and third images, and information on the second destination may be inserted into metadata of the second image.

In addition, information on at least one destination selected from the third and fourth destinations may be inserted into metadata of the fourth image.

In another embodiment, the metadata for each image may be transmitted to an external device. In a specific example, the metadata may be transmitted to the mobile terminal 1000 or the server 2000 described in FIG. 10.

Meanwhile, the first destination and at least one image included in the group of the first destination may be displayed in a first area of the display unit 251 and the second destination and at least one image included in the group of the second destination may be displayed in a second area of the display unit 251.

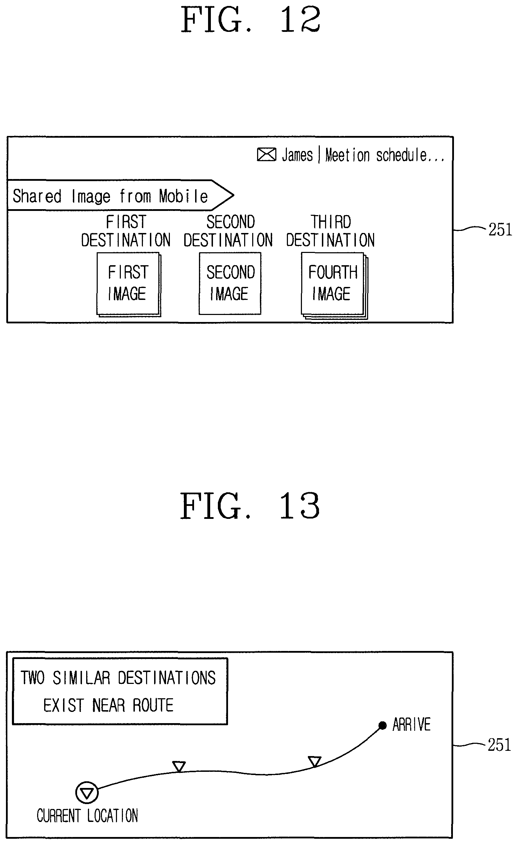

FIG. 12 is a conceptual view illustrating an embodiment in which a plurality of images are classified as groups of destinations and displayed.

Referring to FIG. 12, images are classified and displayed by groups of destinations.

As an embodiment continued from FIG. 11, the first and third images may be included in the group of the first destination and output.

Here, the first and third images may be output in an overlapping manner, and here, a frequently transmitted image or a recently transmitted image may be displayed as a representative image.

In another example, each size may be reduced so that the first and third images may all be seen in the group of the first destination.

Similarly, a second image may be output to the group of the second destination and the fourth image may be output to the group of the third destination.

Meanwhile, when the number of images included in the group of the first destination is equal to or greater than a predetermined number, the controller 820 may calculate priority of the first destination to be higher than other destinations.

In an embodiment, priority may be calculated to be different depending on the number of images included in each group. For example, when the number of images included in the group of the first destination is larger than the number of images included in the group of the second destination, priority for the first destination is calculated to be higher than the priority for the second destination.

Priority may be applied on the basis of several references. For example, if priority of an image is high, an output order thereof on the list of the groups by destinations may come on ahead or the image may be output in the middle of the screen 251.

In a specific example, if the priority for the first destination is higher than the priority for the second destination, the group of the first destination may be output in the middle of the screen 251. In another example, a graphic object (such as an icon, etc.) indicating a high priority may be displayed in the group of the first destination.

Meanwhile, the controller 820 may further search for a similar destination using the first destination.

The similar destination is a place similar to the first destination, and may be variously defined according to a predetermined reference. For example, if the first destination is a mart, similar destinations may include marts at different locations. Similarly, if the first destination is an amusement park, amusement parks at different locations may be included in the similar destination.

In another embodiment, when the vehicle 100 is traveling to a final destination, rather than the first destination, the controller 820 may search the similar destination on the route to the final destination.

In another embodiment, the similar destination may be searched within a predetermined radius based on a current position of the vehicle 100.

FIG. 13 is a conceptual view illustrating an embodiment in which a similar destination regarding a destination is additionally searched.

Referring to FIG. 13, when the number of images included in the group of the first destination is equal to or greater than a predetermined number, the priority for the first destination may be set to be higher than other destinations. In addition, similar destinations may be further searched using the first destination.

In an embodiment, when the vehicle 100 travels along a predetermined driving route, a similar destination may be searched on the driving route. Accordingly, when a similar destination is searched, a location of the similar destination may be displayed on the driving route.

In addition, a message window indicating that the similar destination exists may be output, or a notification message may be output by voice.

Meanwhile, the controller 820 may calculate the driving route using the first and second destinations, and may control the communication unit 810 so that the calculated driving route is output on the display unit 251.

In an embodiment, the controller 820 may control the communication unit 810 such that a thumbnail of the first image is output to a position corresponding to the first destination on the driving route and a thumbnail of the second image is output to a position corresponding to the second destination on the driving route.

In another embodiment, when the driving route is calculated, the controller 820 may determine a running order for the first and second destinations according to the number of images included in the groups of the first and second destinations.

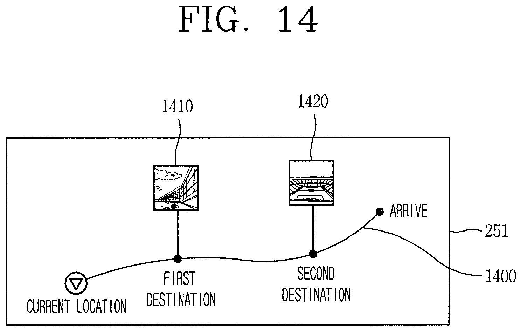

FIG. 14 is a conceptual view illustrating an embodiment in which a driving route calculated using a destination is output.

Referring to FIG. 14, when a first destination is extracted to correspond to a first image and a second destination is extracted to correspond to a second image, a driving route 1400 passing through the first and second destinations may be calculated.

In an embodiment, a driving route passing through the first and second destinations may be calculated in consideration of a current position of the vehicle 100, a traffic situation, a frequently traveled route, and the like.

In another embodiment, a running order for the first and second destinations may be determined according to the number of images included in each of the groups of first and second destinations. In a specific example, when the number of images included in the group of the first destination is greater than the number of images included in the group of the second destination, the driving route 1400 that first passes through the first destination and subsequently passes through the second destination may be calculated.

In addition, the calculated travel route 1400 may be output on the display unit 251, and the positions of the first and second destinations may be displayed on the travel route 1400. Also, a thumbnail 1410 of the first image may be output at the position of the first destination, and a thumbnail 1420 of the second image may be output at the position of the second destination.

In another embodiment, a thumbnail image output to a position of the destination on the driving route may be the most recently received image or an image with high transmission frequency. In a specific example, the first destination may be extracted from the first image, the third image, and the fourth image. Here, if the first image has most recently been transmitted, a thumbnail of the first image may be output to the position of the first destination.

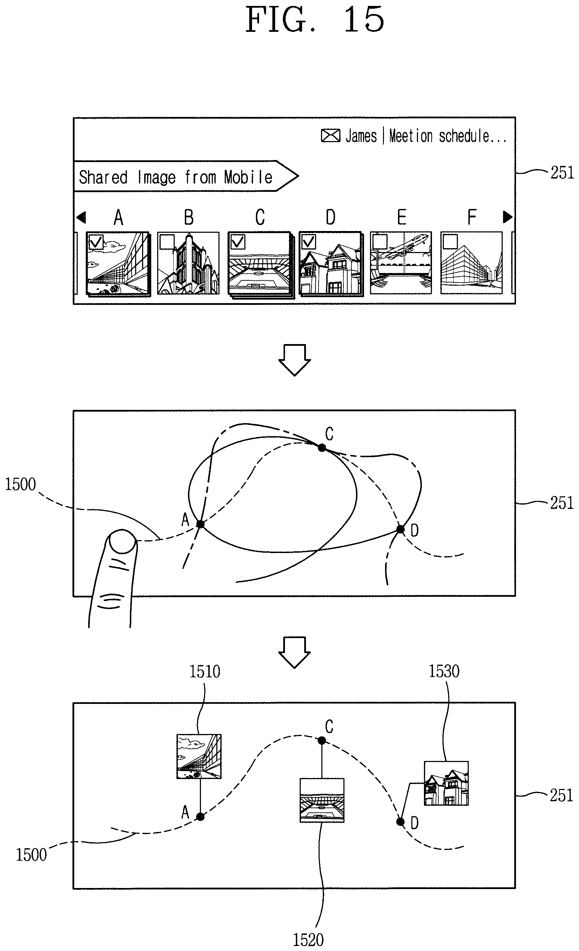

FIG. 15 is a conceptual view illustrating an embodiment in which a plurality of driving routes are output.

Referring to FIG. 15, an occupant may select at least one of groups by destinations. In an embodiment, the occupant may apply a touch to a group of destinations A, C, and D to select the destinations A, C and D. Here, a check mark may be displayed in check boxes of the group of destinations A, C, and D.

In another embodiment, several driving routes passing through the selected destinations A, C, and D may be calculated and displayed on the display unit 251.

As described above, the driving routes may be variously calculated in consideration of the number of images included in each destination, a current location of the vehicle, traffic conditions, routes that the driver has frequently traveled, time, weather, driver preference, stopover, and the like.

In a specific example, if the number of images included in the destination A is largest and the number of images included in the destination D is smallest, a running order may be set to a running order of destinations A, C, and D.

The driver may select a driving route 1500, among several driving routes, by applying a touch input, and the vehicle 100 may travel along the driving route 1500.

In an example, thumbnails 1510, 1520 and 1530 of images corresponding to the destinations A, C and D may be output in the selected driving route 1500. Here, the thumbnails 1510, 1520, and 1530 of the images may be representative images for respective destinations.

In a specific example, each of the representative images for the destinations may be a most recently received image or an image which has been repeatedly received several times for each destination. Or, each of the representative images may be an image having the highest image quality among the images belonging to the group of the destinations.

When the vehicle 100 is turned on, the controller 820 may control the communication unit 810 such that a plurality of images may be received from a terminal that satisfies a predetermined condition among a plurality of terminals located in the vehicle 100.

In an embodiment, the controller 820 may control the communication unit 810 such that a plurality of images are received from the terminal of the driver on the basis of information identifying the driver of the vehicle 100.

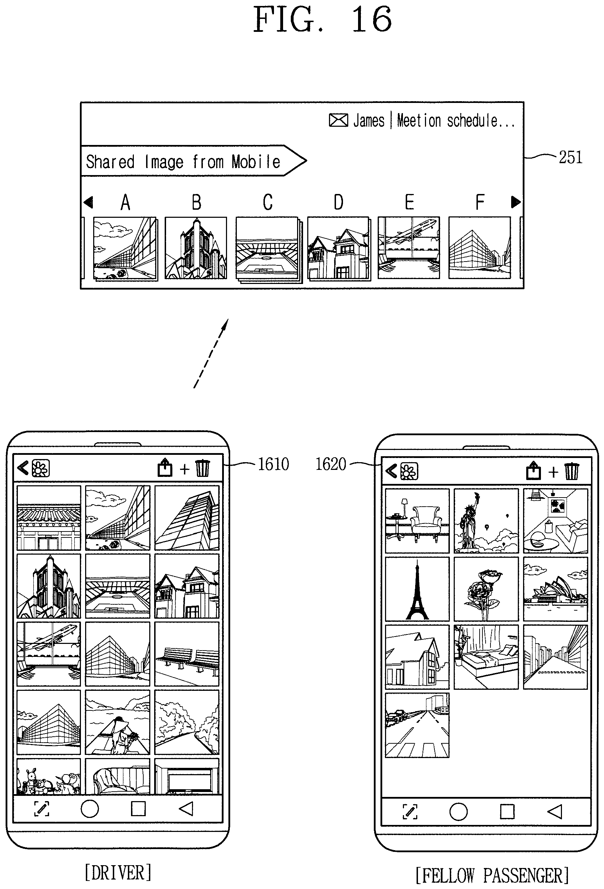

FIG. 16 is a conceptual view illustrating an embodiment in which a plurality of images are received from a terminal of a driver.

Referring to FIG. 16, when the vehicle 100 is turned on and a plurality of terminals 1610 and 1620 in the vehicle 100 are detected, a plurality of images may be preferentially received from the terminal 1610 of the driver.

In an embodiment, the driver's face may be recognized from an image obtained by imaging the inside of the vehicle 100. Accordingly, a plurality of images may be received from the terminal 1610 registered to be owned by the driver.

Hereinafter, an embodiment of selecting an image to be transmitted from an external device and a vehicle to be transmitted will be described with reference to the accompanying drawings.

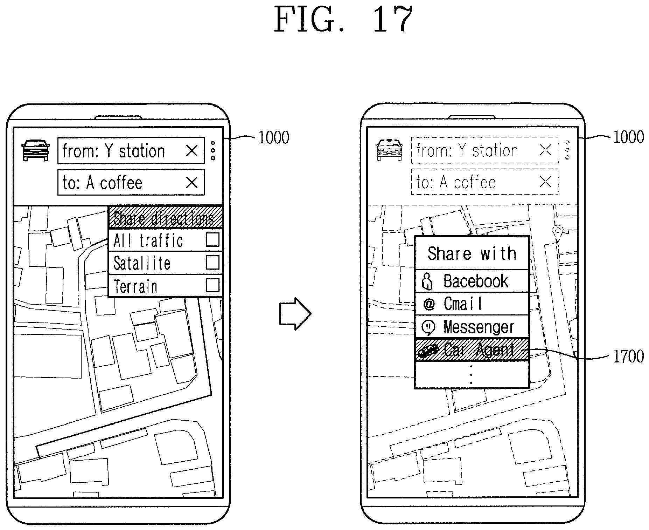

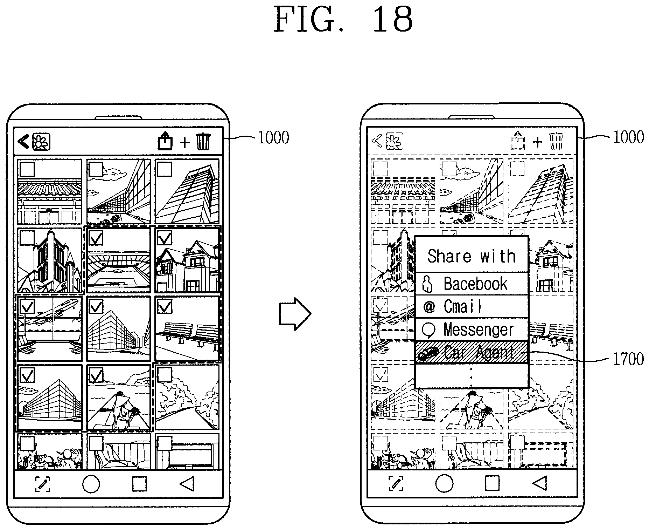

FIGS. 17 and 18 are conceptual views illustrating an embodiment of selecting an image to be transmitted.

Referring to FIG. 17, while using various applications such as a search portal, a map, a messenger, and a calendar, and the like, the mobile terminal 1000 may transmit contents to the vehicle 100 in a sharing manner.

In an embodiment, when a share menu is selected, a menu item 1700 for transmitting contents to the vehicle may be output. Accordingly, when a touch input is applied to the menu item 1700, the corresponding contents may be transmitted to the vehicle 100.

Referring to FIG. 18, the user of the mobile terminal 1000 may select an image to be transmitted among photo album images, and then select the share menu.

Accordingly, the menu item 1700 for transmitting contents to the vehicle may be output, and when a touch input is applied to the menu item 1700, the selected photo image may be transmitted to the vehicle 100.

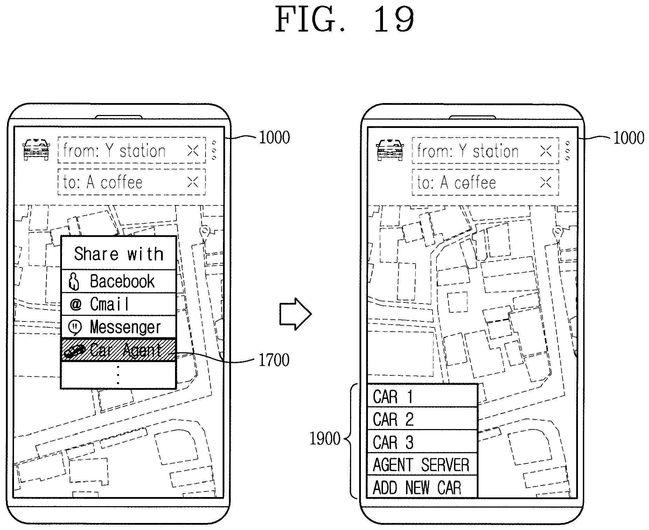

FIG. 19 is a conceptual view illustrating an embodiment of selecting a vehicle to be transmitted.

Referring to FIG. 19, when the menu item 1700 for transmitting contents to the vehicle is selected, a list 1900 of vehicles that may be transmitted may be output.

In an example, the list 1900 may include a previously registered vehicle, a vehicle located within a predetermined distance, and the like.

In a specific example, when a touch input is applied to an item of a first vehicle, selected contents may be transmitted to the first vehicle. Here, the contents may be transmitted at the time when the first vehicle is started. In another example, contents may be transmitted in a chat window with the first vehicle.

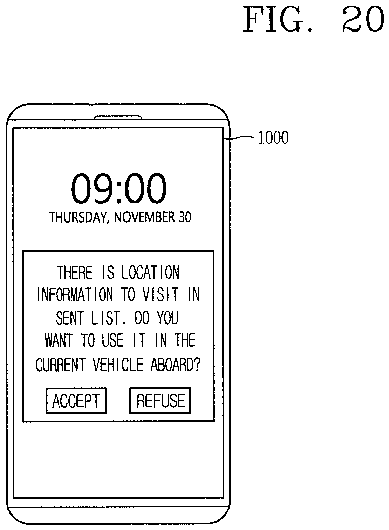

In another example, the list 1900 may include a server. When a touch input is applied to a server item, contents may be transmitted to the server. Thereafter, when a vehicle is detected within a predetermined distance from the terminal, a message inquiring whether to transmit the contents to the vehicle may be output. An embodiment related thereto will be described with reference to FIG. 20.

In another example, an item for registering a new vehicle may be output on the list 1900. Accordingly, a new vehicle for transmission may be added by applying a touch input to the item for registering a new vehicle.

In another embodiment, all or only some of a plurality of images may be transmitted depending on the type of vehicle to which the images are to be transmitted.

In a specific example, if the vehicle to which an image is to be transmitted is an own vehicle, a plurality of images may all be transmitted. Alternatively, if the vehicle to which an image is to be transmitted is not the own vehicle, only some of the plurality of images may be transmitted. If the vehicle to which an image is to be transmitted is a public transportation means such as a taxi, only a limited image may be transmitted.

Hereinafter, an embodiment in which the vehicle output to the list 1900 is set will be described.

In an embodiment, a frequently used vehicle (self-owned vehicle, family owned vehicle, etc.) may be directly registered in advance through a vehicle type, a vehicle number, and the like. To this end, a user authentication process may be performed.

In another example, when a person who carries a terminal gets in the vehicle, the terminal may recognize the corresponding vehicle and a frequently used vehicle may be automatically registered. Alternatively, if a shared car is used, vehicle information may be retrieved from an shared vehicle application and registered.

FIG. 20 is a conceptual view illustrating an embodiment in which a plurality of images are transmitted to a vehicle which has approached a terminal from a server.

Referring to FIG. 20, in the embodiment of FIG. 19, when the server is selected from the list 1900, selected contents may be preferentially transmitted to the server.

Thereafter, when a vehicle is detected within a predetermined distance from the terminal 1000, a message inquiring whether to transmit contents to the vehicle may be output. Accordingly, when transmission is accepted, the contents may be transmitted to the corresponding vehicle.

Hereinafter, in a further embodiment, information calculated through image analysis and information using an in-vehicle image may be inserted into metadata of the image and used in other terminals.

In an embodiment, when a movie poster is received, a corresponding movie may be played in the vehicle. If the occupant is sleepy or bored while the movie is being played, a movie similar to the movie may not be recommended any longer.

Effects of the vehicle control device provided in a vehicle and the method for controlling a vehicle according to the present invention will be described as follows.

According to at least one of the embodiments of the present invention, a destination and a driving route may be automatically proposed by simply transmitting an image, without having to directly input the destination.

Also, by inserting the destination extracted from the image into metadata of the image, destination information related to the image may also be used even in another device or an external server.

In addition, by displaying a thumbnail of the image corresponding to the destination at a position of the destination on the driving route, the position of the destination extracted from the image may be checked by intuition.

The present invention described above may be implemented as a computer-readable code in a medium in which a program is recorded. The computer-readable medium includes any type of recording device in which data that may be read by a computer system is stored. The computer-readable medium may be, for example, a hard disk drive (HDD), a solid state disk (SSD), a silicon disk drive (SDD), a ROM, a RAM, a CD-ROM, a magnetic tape, a floppy disk, an optical data storage device, and the like. The computer-readable medium also includes implementations in the form of carrier waves (e.g., transmission via the Internet). Also, the computer may include the controller 180 of the terminal. Thus, the foregoing detailed description should not be interpreted limitedly in every aspect and should be considered to be illustrative. The scope of the present invention should be determined by reasonable interpretations of the attached claims and every modification within the scope of these claims are included in the scope of the present invention.

The foregoing embodiments and advantages are merely exemplary and are not to be considered as limiting the present disclosure. The present teachings may be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims.

## Claims

1. A control device (800) for use in a vehicle (100), the vehicle (100) including a display unit (251), the control device (800) comprising:
a communication unit (810) configured to receive a plurality of images from an external device; and
at least one processor (820) configured to:
identify destinations that correspond to the plurality of images, respectively,
generate one or more groups comprising one or more of the identified destinations and control the communication unit (810) such that the plurality of images is classified according to the generated one or more groups, and
control the display unit (251) to display at least one of the plurality of images that correspond to the one or more of the identified destinations and that are included in the generated one or more groups,
wherein the at least one processor (820) is further configured to:
identify a plurality of destinations corresponding to a specific image included in the plurality of images, and
determine a group of the one or more groups corresponding to the plurality of destinations by comparing a number of corresponding images and selecting a destination having a largest number of corresponding images among the plurality of destinations.

2. The control device (800) of claim 1, wherein the plurality of images include a first image and a second image, and
wherein the at least one processor (820) is further configured to identify a first destination corresponding to the first image, and a second destination corresponding to the second image.

3. The control device (800) of claim 2, wherein the at least one processor (820) is further configured to:
control the display unit (251) to display, in a first area of the display unit (251), the first destination and at least one image included in a first group of the one or more groups comprising the first destination; and
control the display unit (251) to display, in a second area of the display unit (251), the second destination and at least one image included in a second group of the one or more groups comprising the second destination.

4. The control device (800) of claim 2 or 3, wherein the at least one processor (820) is further configured to:
determine first metadata related to the first image to include information regarding the first destination;
determine second metadata related to the second image to include information regarding the second destination; and
control the communication unit (810) to transmit the first metadata and the second metadata to the external device.

5. The control device (800) of claim 3, wherein the plurality of images includes a third image, and
wherein the at least one processor (820) is further configured to:
determine whether the third image corresponds to the first destination, and
based on a determination that the third image corresponds to the first destination, include the first image and the third image in the first group.

6. The control device (800) of any one of claims 2 to 5, wherein the at least one processor (820) is further configured to:
determine a driving route based on the first and second destinations; and
control the display unit (251) to display the driving route.

7. A method for controlling a vehicle (100) including a display unit (251), the method comprising:
receiving a plurality of images from an external device;
identifying a plurality of destinations corresponding to the plurality of images or a specific image of the plurality of images; and
assisting in guiding to the identified destinations through the display unit (251),
wherein assisting in guiding to the identified destinations comprises:
generating one or more groups comprising one or more of the identified destinations and classifying the plurality of images according to the generated one or more groups,
determining at least one of the plurality of images corresponding to the one or more of the identified destinations included in the generated one or more groups,
displaying, on the display unit (251), the at least one of the plurality of images corresponding to the one or more of the identified destinations included in the generated one or more groups,
identifying a plurality of destinations corresponding to a specific image included in the plurality of images, and
determining and setting a group of the one or more groups corresponding to the plurality of destinations by comparing a number of corresponding images and selecting a destination having a largest number of corresponding images among the plurality of destinations.

## Patentansprüche

1. Steuervorrichtung (800) zur Verwendung in einem Fahrzeug (100), wobei das Fahrzeug (100) eine Anzeigeeinheit (251) aufweist, wobei die Steuervorrichtung (800) aufweist:
eine Kommunikationseinheit (810), die dazu eingerichtet ist, mehrere Bilder von einer externen Vorrichtung zu empfangen; und
mindestens einen Prozessor (820), der dazu eingerichtet ist:
Ziele zu identifizieren, die jeweils den mehreren Bildern entsprechen,
eine oder mehrere Gruppen zu erzeugen, die eines oder mehrere der identifizierten Ziele aufweisen, und die Kommunikationseinheit (810) derart zu steuern, dass die mehreren Bilder gemäß der erzeugten einen oder mehreren Gruppen klassifiziert werden, und
die Anzeigeeinheit (251) zu steuern, um mindestens eines der mehreren Bilder anzuzeigen, die dem einen oder den mehreren identifizierten Zielen entsprechen und die in der erzeugten einen oder den mehreren Gruppen enthalten sind,
wobei der mindestens eine Prozessor (820) ferner dazu eingerichtet ist:
mehrere Ziele zu identifizieren, die einem spezifischen Bild entsprechen, das in den mehreren Bildern enthalten ist, und
eine Gruppe der einen oder mehreren Gruppen, die den mehreren Zielen entsprechen, durch Vergleichen einer Anzahl von entsprechenden Bildern und Auswählen eines Ziels mit einer größten Anzahl von entsprechenden Bildern unter den mehreren Zielen zu bestimmen.

2. Steuervorrichtung (800) nach Anspruch 1, wobei die mehreren Bilder ein erstes Bild und ein zweites Bild enthalten, und
wobei der mindestens eine Prozessor (820) ferner dazu eingerichtet ist, ein erstes Ziel, das dem ersten Bild entspricht, und ein zweites Ziel, das dem zweiten Bild entspricht, zu identifizieren.

3. Steuervorrichtung (800) nach Anspruch 2, wobei der mindestens eine Prozessor (820) ferner dazu eingerichtet ist:
die Anzeigeeinheit (251) zu steuern, um in einem ersten Bereich der Anzeigeeinheit (251) das erste Ziel und mindestens ein Bild anzuzeigen, das in einer ersten Gruppe der einen oder mehreren Gruppen enthalten ist, die das erste Ziel aufweist; und
die Anzeigeeinheit (251) zu steuern, um in einem zweiten Bereich der Anzeigeeinheit (251) das zweite Ziel und mindestens ein Bild, das in einer zweiten Gruppe der einen oder mehreren Gruppen enthalten ist, die das zweite Ziel aufweist, anzuzeigen.

4. Steuervorrichtung (800) nach Anspruch 2 oder 3, wobei der mindestens eine Prozessor (820) ferner dazu eingerichtet ist:
erste Metadaten zu bestimmen, die sich auf das erste Bild beziehen, um Informationen bezüglich des ersten Ziels einzubeziehen;
zweite Metadaten zu bestimmen, die sich auf das zweite Bild beziehen, um Informationen bezüglich des zweiten Ziels einzubeziehen; und
die Kommunikationseinheit (810) zu steuern, um die ersten Metadaten und die zweiten Metadaten an die externe Vorrichtung zu übertragen.

5. Steuervorrichtung (800) nach Anspruch 3, wobei die mehreren Bilder ein drittes Bild enthalten, und
wobei der mindestens eine Prozessor (820) ferner dazu eingerichtet ist:
zu bestimmen, ob das dritte Bild dem ersten Ziel entspricht, und
basierend auf einer Bestimmung, dass das dritte Bild dem ersten Ziel entspricht, das erste Bild und das dritte Bild in die erste Gruppe einzubeziehen.

6. Steuervorrichtung (800) nach einem der Ansprüche 2 bis 5, wobei der mindestens eine Prozessor (820) ferner dazu eingerichtet ist:
eine Fahrroute basierend auf dem ersten und zweiten Ziel zu bestimmen; und die Anzeigeeinheit (251) zu steuern, um die Fahrroute anzuzeigen.

7. Verfahren zum Steuern eines Fahrzeugs (100), das eine Anzeigeeinheit (251) aufweist, wobei das Verfahren aufweist:
Empfangen von mehreren Bildern von einer externen Vorrichtung;
Identifizieren von mehreren Zielen, die den mehreren Bildern oder einem spezifischen Bild der mehreren Bilder entsprechen; und
Unterstützen beim Führen zu den identifizierten Zielen durch die Anzeigeeinheit (251),
wobei das Unterstützen beim Führen zu den identifizierten Zielen das aufweist:
Erzeugen einer oder mehrerer Gruppen, die eines oder mehrere der identifizierten Ziele aufweisen, und Klassifizieren der mehreren Bilder gemäß der erzeugten einen oder mehreren Gruppen,
Bestimmen mindestens eines der mehreren Bilder, die dem einen oder mehreren der identifizierten Ziele entsprechen, die in der erzeugten einen oder mehreren Gruppen enthalten sind,
Anzeigen, auf der Anzeigeeinheit (251), des mindestens einen der mehreren Bilder, die dem einen oder den mehreren der identifizierten Ziele entsprechen, die in der erzeugten einen oder den mehreren Gruppen enthalten sind,
Identifizieren von mehreren Zielen, die einem spezifischen Bild entsprechen, das in den mehreren Bildern enthalten ist, und
Bestimmen und Festlegen einer Gruppe der einen oder mehreren Gruppen, die den mehreren Zielen entsprechen, durch Vergleichen einer Anzahl von entsprechenden Bildern und Auswählen eines Ziels mit einer größten Anzahl von entsprechenden Bildern unter den mehreren Zielen.

## Revendications

1. Dispositif de commande (800) destiné à être utilisé dans un véhicule (100), le véhicule (100) comprenant une unité d'affichage (251), le dispositif de commande (800) comprenant :
une unité de communication (810) configurée pour recevoir une pluralité d'images d'un dispositif externe ; et
au moins un processeur (820) configuré pour :
identifier les destinations qui correspondent à la pluralité d'images, respectivement,
générer un ou plusieurs groupes comprenant une ou plusieurs des destinations identifiées et commander l'unité de communication (810) de sorte que la pluralité d'images soit classée en fonction du ou des groupes générés, et
commander l'unité d'affichage (251) pour afficher au moins une des images de la pluralité d'images correspondant à la destination ou à plusieurs des destinations identifiées et incluses dans le ou les groupes générés,
dans lequel l'au moins un processeur (820) est en outre configuré pour :
identifier une pluralité de destinations correspondant à une image spécifique incluse dans la pluralité d'images, et
déterminer un groupe parmi le ou les groupes correspondant à la pluralité de destinations en comparant un nombre d'images correspondantes et en sélectionnant une destination ayant le plus grand nombre d'images correspondantes parmi la pluralité de destinations.

2. Dispositif de commande (800) de la revendication 1, dans lequel la pluralité d'images comprend une première image et une deuxième image, et.
dans lequel l'au moins un processeur (820) est en outre configuré pour identifier une première destination correspondant à la première image, et une deuxième destination correspondant à la deuxième image.

3. Dispositif de commande (800) de la revendication 2, dans lequel l'au moins un processeur (820) est en outre configuré pour :
commander l'unité d'affichage (251) pour afficher, dans une première zone de l'unité d'affichage (251), la première destination et au moins une image incluse dans un premier groupe du ou des groupes comprenant la première destination ; et
commander l'unité d'affichage (251) pour afficher, dans une deuxième zone de l'unité d'affichage (251), la deuxième destination et au moins une image comprise dans un deuxième groupe du ou des groupes comprenant la deuxième destination.

4. Dispositif de commande (800) de la revendication 2 ou 3, dans lequel l'au moins un processeur (820) est en outre configuré pour :
déterminer les premières métadonnées relatives à la première image pour inclure des informations concernant la première destination ;
déterminer les deuxièmes métadonnées relatives à la deuxième image pour inclure des informations concernant la seconde destination ; et
commander l'unité de communication (810) pour transmettre les premières métadonnées et les deuxièmes métadonnées au dispositif externe.

5. Dispositif de commande (800) de la revendication 3, dans lequel la pluralité d'images comprend une troisième image, et.
dans lequel l'au moins un processeur (820) est en outre configuré pour :
déterminer si la troisième image correspond à la première destination, et
sur la base d'une détermination que la troisième image correspond à la première destination, inclure la première image et la troisième image dans le premier groupe.

6. Dispositif de commande (800) de l'une quelconque des revendications 2 à 5, dans lequel l'au moins un processeur (820) est en outre configuré pour :
déterminer un itinéraire de conduite basé sur la première et la deuxième destination ; et
commander l'unité d'affichage (251) pour afficher l'itinéraire de conduite.

7. Procédé de commande de véhicule (100) comprenant une unité d'affichage (251), le procédé comprenant :
la réception d'une pluralité d'images provenant d'un dispositif externe ;
l'identification d'une pluralité de destinations correspondant à la pluralité d'images ou à une image spécifique de la pluralité d'images ; et
l'assistance au guidage vers les destinations identifiées par l'intermédiaire de l'unité d'affichage (251),
dans lequel l'assistance au guidage vers les destinations identifiées consiste à :
générer un ou plusieurs groupes comprenant une ou plusieurs des destinations identifiées et classer la pluralité d'images en fonction du ou des groupes générés,
déterminer au moins une image parmi la pluralité d'images correspondant à la destination ou à plusieurs des destinations identifiées incluses dans le ou les groupes générés, afficher, sur l'unité d'affichage (251), l'au moins une image de la pluralité d'images correspondant à la destination ou à plusieurs des destinations identifiées incluses dans le ou les groupes générés,
identifier une pluralité de destinations correspondant à une image spécifique incluse dans la pluralité d'images, et
déterminer et définir un groupe du ou des groupes correspondant à la pluralité de destinations en comparant un nombre d'images correspondantes et en sélectionnant une destination ayant le plus grand nombre d'images correspondantes parmi la pluralité de destinations.
